# EUROPEAN PATENT APPLICATION

(11) **EP 1 293 770 A2**
(43) Date of publication of application: **19.03.2003**
(21) Application number: 02018628.4
(22) Date of filing: 20.08.2002
(51) Int. Cl.: G01N 27/04

(54) **Humidity sensor**

(30) Priority: 13.09.2001 IT MI20011910
(71) Applicant: IMIT S.p.A., I-28053 Castelletto Ticino (Novara) (IT)
(72) Inventor: Zucco, Mario, 28053 Castelletto Ticino (Novara) (IT); Negro, Alfredo, 28053 Castelletto Ticino (Novara) (IT); Montanaro, Laura, 28053 Castelletto Ticino (Novara) (IT)
(74) Representative: Lecce, Giovanni

(57) **Abstract**

A humidity sensor based on resistivity measures of a sensitive material whose electrical conductivity changes according to the relevant humidity, characterised by the fact that said sensitive material is iron oxide additioned or doped with at least an oxide of an alkaline, alkaline-earth or transition metal.

## Description

The present invention relates to a humidity sensor.

More particularly, the present invention relates to a humidity sensor for the evaluation of the humidity rate based on resistivity measures.

The humidity sensor of the present invention can be particularly applied in the conditioning and dehumidification fields and also in the hood industry for the optimisation of the operation and the reduction of costs, for the display and, if necessary, adjusting of the relevant humidity rate in indoor environments or inside digital or analog thermohygrometers, etc.

The humidity sensors are well known and commonly used. They allow measuring the relevant humidity of an environment according to capacitive, coulometrical gravimetrical, hygrometrical, resistive measures, etc.

Particularly, the humidity sensors based on resistivity measures refer to the electrical conductivity variation of materials which are sensitive to the humidity rate. It is therefore known that the electrical conductivity of these materials proportionally changes at the relevant humidity variation of the environment wherein said materials are exposed.

The main drawback of these sensors is due to the fact that they are not very sensitive to the relevant humidity variations of the environment wherein they are exposed, as a sudden relevant humidity variation of the environment does not imply an equal sudden variation of the electrical resistivity value.

Moreover, known sensors ensure a correct evaluation of the relevant humidity rate only in a narrow value and/or temperature field, therefore their application is limited.

Object of the present invention is to remove the above-mentioned drawbacks of the known humidity sensors.

More particularly, object of the present application is to provide a humidity sensor based on the electrical conductivity variation of a material which is sensitive to the humidity rate and can be used in a practical and reliable way within a broad range of relevant humidity and temperature with a high response speed even to sudden variations of the humidity value.

A further purpose of the present invention is to provide a humidity sensor having repetitiveness features, which does not show significant hysteresis phenomena, it is easy to carry out and whose cost is very low.

In its more general aspect, the present invention allows to obtain these and other purposes which will result from the following description wherein an iron oxide layer additioned or doped with at least an oxide of an alkaline, alkaline-earth or transition metal is used as a material sensitive to the humidity rate and whose electrical conductivity varies according to the relevant humidity.

Therefore, object of the present invention is a humidity sensor based on electrical conductivity measures of a sensitive material, whose electrical conductivity varies according to the relevant humidity, wherein said material is constituted by an iron oxide layer additioned or doped with at least an oxide of an alkaline, alkaline-earth or transition metal.

Examples of an alkaline, alkaline-earth or transition metal can be lithium, sodium, potassium, calcium, magnesium, barium, etc.

For the purpose of the present invention, the quantity of oxide of an alkaline, alkaline-earth or transition metal added to the iron oxide is not critical and it varies according to the type of doping oxide or metal oxides which are used. Generally speaking, this quantity can vary between 0.01 and 50% by weight with respect to the total mixture.

The sensitive material layer, constituted by iron oxide doped with at least an oxide of an alkaline, alkaline-earth or transition metal, is laid down in the form of film on an inert material substratum such as the ceramic. The deposition is preferably carried out by the well-known silkscreen planar technology.

The anchorage of the sensitive material layer to the substratum is guaranteed by a thermal treatment at temperatures higher than 750°C using noble metal electrodes such as gold ones.

On the laid down sensitive material layer, two metal electrodes allowing the measurement of the electrical resistance according to the humidity rate of the environment wherein the sensor is exposed are subsequently laid down preferably by the well-known silkscreen technology. These electrodes are also made of noble material such as gold.

On the substrate face which is opposite to the one wherein the sensitive material layer is laid down, one or more heating and/or thermal control resistors can be applied by silkscreen technology. These resistors are adjusted in such a way that they heat the sensor at a temperature comprised between 100°C and 500°C. This thermal treatment allows the cleaning by evaporation, decomposition or combustion of the exposed surface of the sensitive material layer from solid, liquid or gaseous impurities absorbed by the surface and, at the same time, it ensures the periodic restoration of the initial purity conditions.

Some elements for the temperature detection can be associated to the resistors such as positive or negative coefficient temperature thermoresistors which are applied by the well-known silkscreen technologies.

An insulation coating layer provided with temperature detecting elements can be added to said face.

Building and operating features of the humidity sensor object of the present invention can be better understood by the following description wherein reference is made to the figures of the enclosed drawings representing an illustrative and non-limitative embodiment of the present invention and wherein:
Figure 1 is a front schematic view of a face of the humidity sensor of the present invention upon which the sensitive material layer and the metal contact elements are laid down;
Figure 2 is a schematic view of a section of the humidity sensor face of Figure 1 obtained by a plan passing along the line A-A;
Figure 3 is a front schematic view of the other face of the humidity sensor of Figure1 wherein heating resistors and, if necessary, the temperature detecting elements are laid down;
Figure 4 is a schematic view of a section of the other face of the humidity sensor of Figure 3 obtained by a plan passing along the line B-B;
Figure 5 shows the diagram of the variation of the electrical resistivity value for various temperatures according to the relevant humidity obtained by the humidity sensor shown in the previous Figures from 1 to 4 and
Figure 6 shows the diagram of the electrical resistivity value variation after a sudden variation of the humidity rate at a constant temperature obtained by the humidity sensor shown in the previous Figures from 1 to 4.

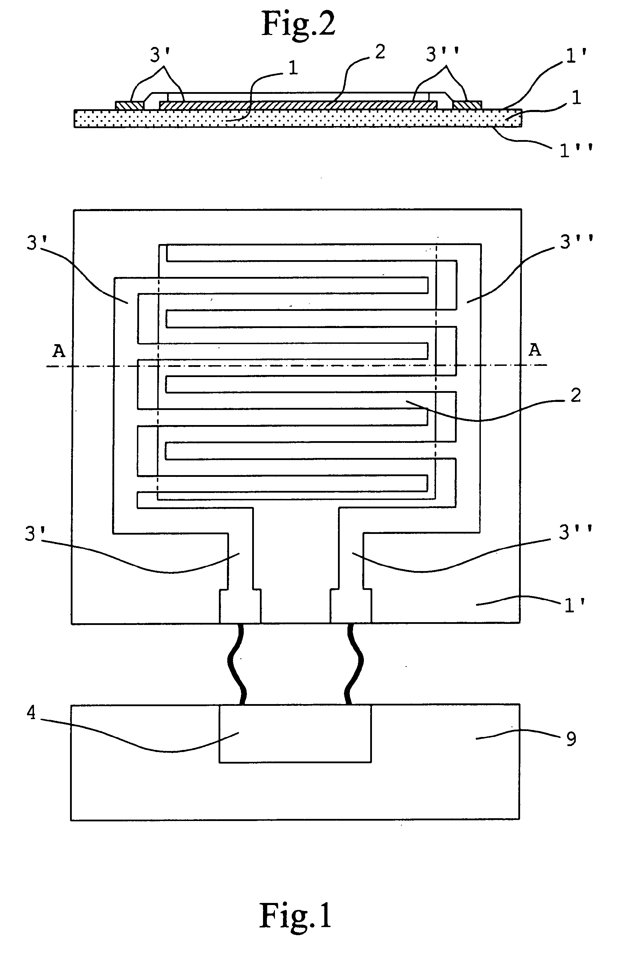

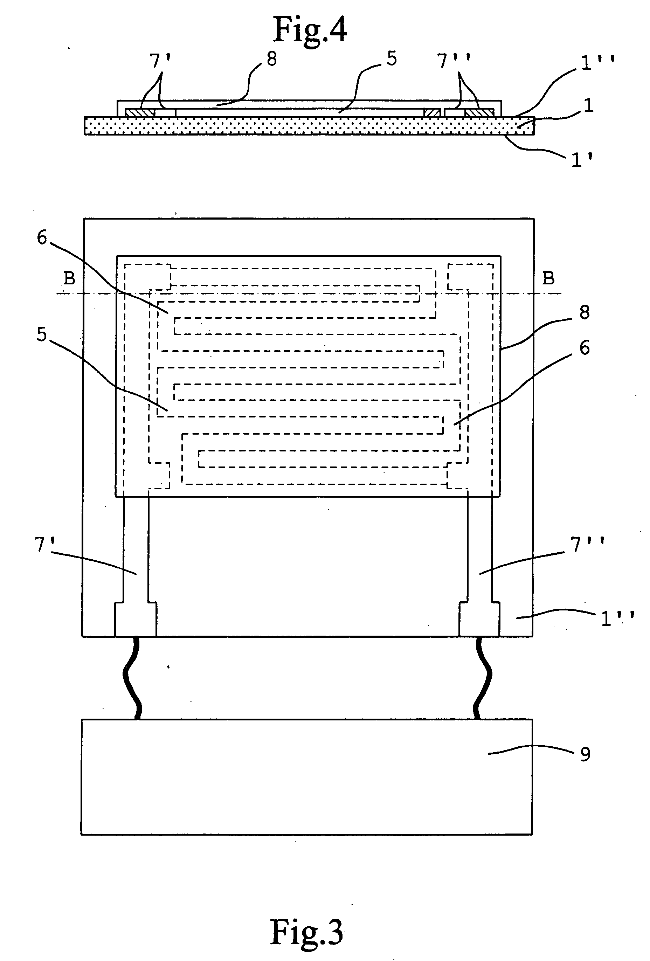

With particular reference to Figures 1 and 4, the humidity sensor of the present invention comprises a substratum 1 of ceramic material containing on a face 1' the one layer 2 of iron oxide doped with the 5% by weight of potassium oxide, laid down by silkscreen planar technology.

The layer 2 of oxide is subsequently treated at 900°C for one hour with gold electrodes in order to ensure its anchorage to the substratum 1.

Two gold electrodes 3' and 3" connected to an electronic circuit 4 for the electrical resistivity measurement between the two electrodes 3' and 3" are placed in contact with the oxide layer 2.

On the other opposite face 1" of the substratum 1, a heating actuator, marked in its whole with 5 and prearranged in order to allow the cleaning of the oxide layer surface 2 by evaporation, decomposition and/or combustion of possible absorbed impurities and therefore ensure the periodic restoration of the optimum initial purity conditions.

This actuator 5 comprises one or more heating and/or thermal control resistors (6) applied by silkscreen technology on the face (1") of the substratum (1) opposite to the one containing the oxide layer 2 and the contact elements 7' and 7". These resistors (6) are adjusted in such a way to heat the sensor at a temperature comprised between 100°C and 500°C.

An inert material or electrically insulating material layer 8 is applied as a covering on said face 1".

In order to avoid electrical interferences, the heating resistor 6 is electrically insulated by the oxide layer 2.

The contact elements 7' and 7" of the heating resistor 6 and the electrodes 3' and 3" of the oxide layer 2 are connected to a feeding, detection and control electronic unit 9. This unit 9 provides enough feeding to avoid polarization phenomena, it detects and processes the signal coming from the oxide layer 2 and it simultaneously provides the feeding to the heating actuator 5.

The sensor can be built in a protection body which is prearranged to be installed like a probe.

During the operation the resistivity measured between the two electrodes 3' and 3" through the electronic unit 9 indicates the relevant humidity of the exposition environment.

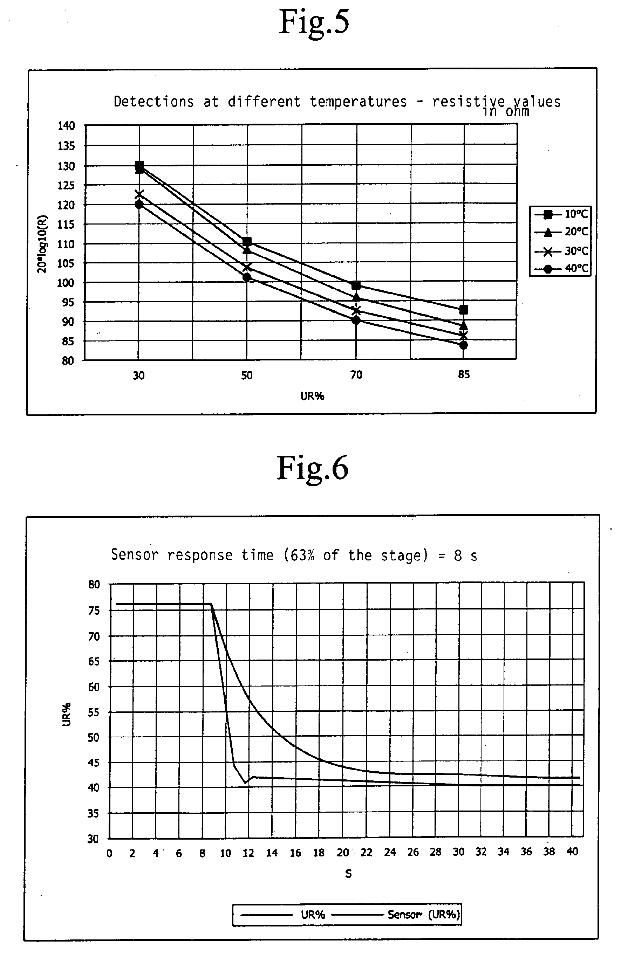

The diagram of Figure 5 shows the homogenous, repetitive and constant behaviour of the humidity sensor of the present invention at various temperatures.

The diagram of Figure 6 highlights the high response speed (about 8 seconds) of the sensor of the present invention to the relevant humidity variations without significant hysteresis phenomena.

Even though the present invention has been described with reference to one possible embodiment given as an illustrative and non-limitative example, many changes and variations can be carried out by a person skilled in the art according to the lesson that can be drawn from the above-mentioned description. It is therefore understood that the present invention is meant to comprise all changes and variations falling within the spirit and the protective scope of the following claims.

## Claims

1. A humidity sensor based on resistivity measures of a sensitive material whose electrical conductivity changes according to the relevant humidity, **characterised by** the fact that said sensitive material is iron oxide additioned or doped with at least an oxide of an alkaline, alkaline-earth or transition metal.

2. The humidity sensor according to claim 1, **characterised by** the fact that the quantity of oxide of an alkaline, alkaline-earth or transition metal added to the iron oxide is comprised between 0.01 and 50% by weight of the mixture.

3. The humidity sensor according to claim 1 or 2, **characterized by** the fact that the oxide of an alkaline, alkaline-earth or transition metal is chosen between the litium, sodium, potassium, calcium, magnesium and barium oxides.

4. The humidity sensor according to any of the previous claims, **characterised by** the fact that it comprises a substractum (1) of ceramic material containing on a face (1') a layer (2) of iron oxide doped with at least one oxide of an alkaline, alkaline-earth or transition metal and two noble metal electrodes (3' and 3") placed in contact with said layer (2) and connected to an electronic circuit (4) for the electrical resistivity measurement between the two electrodes (3' and 3").

5. The humidity sensor according to any of the previous claims, **characterised by** the fact that the iron oxide substratum doped with at least an oxide of an alkaline, alkaline-earth or transition metal is submitted to a thermal treatment at temperatures higher than 750°C using noble metal electrodes in order to ensure its anchorage to the substratum (1).

6. The humidity sensor according to any of the previous claims **characterised by** the fact that the other opposite face (1") of the substratum (1) is provided with a heating actuator (5) for the cleaning of the oxide layer surface (2) by evaporation, decomposition and/or combustion of possible absorbed impurities.

7. The humidity sensor according to claim 6, **characterised by** the fact that the heating actuator (5) comprises one or more heating and/or thermal control resistors (6) and contact elements (7' and 7"); said heating and/or thermal control resistors (6) being adjusted in such a way to heat the sensor to a temperature comprised between 100°C and 500°C.

8. The humidity sensor according to any of the previous claims **characterised by** the fact that the contact elements (7' and 7") of the heating resistor (6) and the electrodes (3' and 3") of the oxide layer (2) are connected to a feeding, detecting and control electronic unit (9).

9. The humidity sensor according to any of the previous claims **characterised by** the fact that the oxide layer (2) and the heating and/or thermal control resistors (6) are applied through silkscreen technology.

10. The humidity sensor according to any of the previous claims **characterised by** the fact that the face (1") of the substratum (1) provided with the heating actuator (5) is covered with an inert material or electrically insulating layer.
